# EUROPEAN PATENT SPECIFICATION

(11) **EP 0 825 097 B1**
(45) Date of publication and mention of the grant of the patent: **02.05.2002**
(21) Application number: 97306437.1
(22) Date of filing: 22.08.1997
(51) Int. Cl.: B62D 53/06

(54) **Extendible flatbed trailers**
Verlängerbarer Flachbettanhänger
Remorque à plateau extensible

(30) Priority: 23.08.1996 GB 9617698
(43) Date of publication of application: 25.02.1998
(73) Proprietor: Raven, Paul Anthony, Suffolk, Suffolk IP14 1AX (GB); Raven, Kevin William, Ipswich, Suffolk IP6 0JH (GB); Raven, Carole May, Ipswich, Suffolk IP2 9QJ (GB)
(72) Inventor: Raven, Paul Anthony, Stowmarket, Suffolk IP14 1AX (GB); Raven, Kevin William, Great Blankenham, Suffolk IP6 0JH (GB)
(74) Representative: Copp, David Christopher

(56) References cited:
- WO-A-96/25302
- DE-A- 4 321 271
- US-A- 3 752 502

## Description

The present invention relates to extendible flatbed trailers which may be connected to and towed by a truck, and in particular to extendible flatbed trailers having a substantially flat floor when extended and to a method of extending such trailers.

There are many variety of flatbed trailers which may be connected to and towed by a truck. Some consist mainly of a floored surface above the trailer frame; others have additional structural elements, for example, fold-down sides, curtain sides or top, rigid sides or top, and vertical side pillars. Such trailers are often used to transport a wide variety of items such as palletised goods, concrete or steel beams and logs.

Flatbed trailers can also be adapted to carry ISO standard 6.1 m, 12.2 m or 13.7 m (20, 40 or 45 foot) containers by the provision of flip-up standard twist-lock container mounts in the flatbed floor.

Because a flatbed trailer may at times need to be only partially loaded, it may be desirable for the flatbed trailer to be extendible. One example of an extendible flatbed trailer is described in EP 0 551 159 Al which discloses a trailer with curtain sides and top with a flatbed floor in two sections. The floor sections are centrally supported on an extendible box-within-a-box chassis, with the forwards floor section sliding over the rearwards floor section as the trailer is retracted. Whilst this arrangement provides a flat floor surface when the trailer is retracted, there is a substantial step between the floor section surfaces in the extended position. This may be inconvenient if a load such as a pallet has to span such a step. The step may also make it more difficult to use a fork lift truck on the flatbed, and the step may potentially become damaged if struck by the fork lift truck tines. Such a step may also present a tripping hazard to workers on the flatbed surface.

It is an object of the present invention to provide an extendible flatbed trailer with a reduced step or with no step between floor sections.

Accordingly, the invention provides an extendible flatbed trailer comprising: a chassis section, the chassis section supporting a first platform, the first platform having a load bearing first floor surface; and a wheeled bogie section, the bogie section supporting a second platform, the second platform having a load bearing second floor surface, wherein the bogie section is slidably connected to the chassis section and relatively movable between extended and retracted positions, one of the floor surfaces relatively extending from underneath the other floor surface as the sections are moved from a retracted to an extended position, characterised in that the trailer comprises elevation means for altering the relative levels of the floor surfaces with respect to each other so that when the sections are extended the relative levels of the floor surfaces may be altered by the elevation means so that the platforms present substantially co-planar floor surfaces.

The term "substantially co-planar floor surfaces" as used herein means either no step between the platforms, or a small step which is shallow enough to avoid a tripping hazard, or to allow the loading of a palletised load across the step, or to avoid a hazard with fork lift truck tines. It has been found in most cases that this means a step of less than 20 mm height. Ideally, the step should be 3 mm or less in height.

The width of a typical flatbed trailer may be up to 2.55 m, and the length may be between typically 6.09 m and 13.7 m (20 feet and 45 feet), so the platforms will generally be elongate. Such a platform will present a load bearing surface which may be walked over and which may readily be used to support goods such as pallets, or the weight of a fork lift truck.

Preferably, the first floor surface extends from underneath the second floor surface.

The elevation means may act on one or both of the platforms, but preferably acts on the first platform alone.

At least one section may have a longitudinal chassis member to support a load bearing platform. A pair of parallel longitudinal chassis members may be spaced equidistantly from a longitudinal centre line of the trailer, with a first chassis member from one section slidably retained within a second chassis member from another section.

In general, at least one section may have transverse chassis members, fixed to a longitudinal chassis member, which may extend across the full width of a load bearing platform, in order to support the platform. The elevation means may then be positioned between a chassis member, either transverse or longitudinal, and a platform.

Because the longitudinal chassis members will most conveniently be fixed to road running gear, or to a king pin mount for a towing truck, the elevation means will move a platform up and down with respect to the longitudinal chassis member when the elevation means alters the relative levels of the floor surfaces.

A platform may advantageously be provided with a channel, the longitudinal chassis member extending along the channel and being retained at least partly within the channel when the elevation means alters the relative levels of the floor surfaces. There may be a pair of channels for the pair of longitudinal chassis members, but there could be a single channel for both longitudinal chassis members, with each chassis member being close to one of the outer walls of the channel. The channel walls preferably conceal any gap between the longitudinal chassis member and the platform when the elevation means alters the relative levels of the floor surfaces.

The elevation means may comprise one or more air bags which when inflated push up a platform. Elevation means such as air bags will activate continuously over a certain range with changes in air pressure. In order to prevent such means from altering the height of a platform too far, the channel should have a retention feature. The longitudinal chassis member may then have a stop feature, the stop and retention features being adapted to limit how far the platform may move away from the longitudinal chassis member.

For the same reason, to limit how far the elevation means may be depressed by the application of a heavy load on a platform, the elevation means preferably has means to secure the platform in position after the elevation means have pushed up the platform. Such means may comprise a pin which inserts in a seat between a chassis member and the platform.

The seat may be an aperture in a chassis member, or the gap between the chassis member and the platform.

The longitudinal chassis member may be an I-beam, and if the other section has a pair of longitudinal chassis members in the form of inwardly opposed C-beams, the I-beams may be slidably movable within the C-beams. The chassis members may be of steel or, if maximising the weight of loads to be carried is important, extruded aluminium.

If the longitudinal chassis member is an I-beam, the beam may have a laterally extending lip, for example the top of the "I", which acts as the stop feature.

The channel may be in the form of an inverted square "U", with a ledge extending laterally across a mouth of the "U" or channel, the ledge acting as the retention feature.

The channel advantageously has a base which serves as a load bearing member for the uppermost platform when the platforms are moved between extended and retracted positions. For example, the outer side of the base of the inverted square "U" may be made from steel and be flush with the platform floor surface, so forming a track in the floor surface, and the uppermost platform may have a set of downwardly facing rollers or bearings which run along this track to support the weight of the uppermost platform between extended and retracted positions.

The trailer will generally have means to secure the sections in an extended position prior to alteration of the relative floor levels by the elevation means. The means are preferably operable independently of the elevation means, in which case an interlock device may be provided such that the elevation means may not be activated until the trailer has been secured in the extended position.

The extendible flatbed trailer may have additional structural elements above the floor of a platform for containing a load. For example, the trailer may have any of: fold-down sides, curtain sides or top, rigid sides or top, and vertical side pillars.

The trailer may also be used for containerised transport, particularly for ISO standard 6.1 m, 12.2 m, 13.7 m (20, 40, 45 feet) containers, if the trailer has suitable mounts in the floor of a platform.

Also according to the invention, there is provided a method of extending an extendible flatbed trailer, the trailer comprising: a chassis section, the chassis section supporting a first platform, the first platform having a load bearing first floor surface; and a wheeled bogie section, the bogie section supporting a second platform, the second platform having a load bearing second floor surface, wherein the bogie section is slidably connected to the chassis section and relatively movable between extended and retracted positions, one of the platforms nesting underneath the other platform when the trailer is retracted, characterised in that the trailer comprises elevation means for altering the relative levels of the floor surfaces with respect to each other, and in that the method comprises the steps of:
a) extending the sections to pull one of the platforms out from underneath the other platform; and
b) then altering the relative levels of the floor surfaces with respect to each other so that the platforms present substantially co-planar floor surfaces.

If the trailer has means to secure the sections in an extended position, the method may comprising the step of securing the sections in an extended position after extending the platform but before activation of the elevation means.

If the elevation means has means to secure the platform in position after the elevation means has altered the relative levels of the floor surfaces, the method may comprise the step of securing the platform in position after the level of the floor surface has been altered by the elevation means.

The invention will now be described by way of example, with reference to the accompanying drawings, in which:
Figure 1 is a side view of the extendible flatbed trailer according to the invention, showing a bogie section and a chassis section in an extended position and with a forward floor platform lowered;
Figure 2 is a side view of the extendible flatbed trailer of Figure 1 with the forward floor platform raised;
Figure 3 is a top view of the extendible flatbed trailer of Figures 1 and 2;
Figure 4 is a cross-section view of the extendible flatbed trailer of Figure 1, taken through line IV-IV;
Figure 5 is a cross-section view of the extendible flatbed trailer of Figure 1, taken through line V-V;
Figure 6 is a cross-section view of the extendible flatbed trailer of Figure 1, taken through line VI-VI;
Figure 7 is across-section view of the extendible flatbed trailer of Figure 1, taken through line VII-VII; and
Figure 8 is a cross-section view of the extendible flatbed trailer of Figure 2, taken through line VIII-VIII.

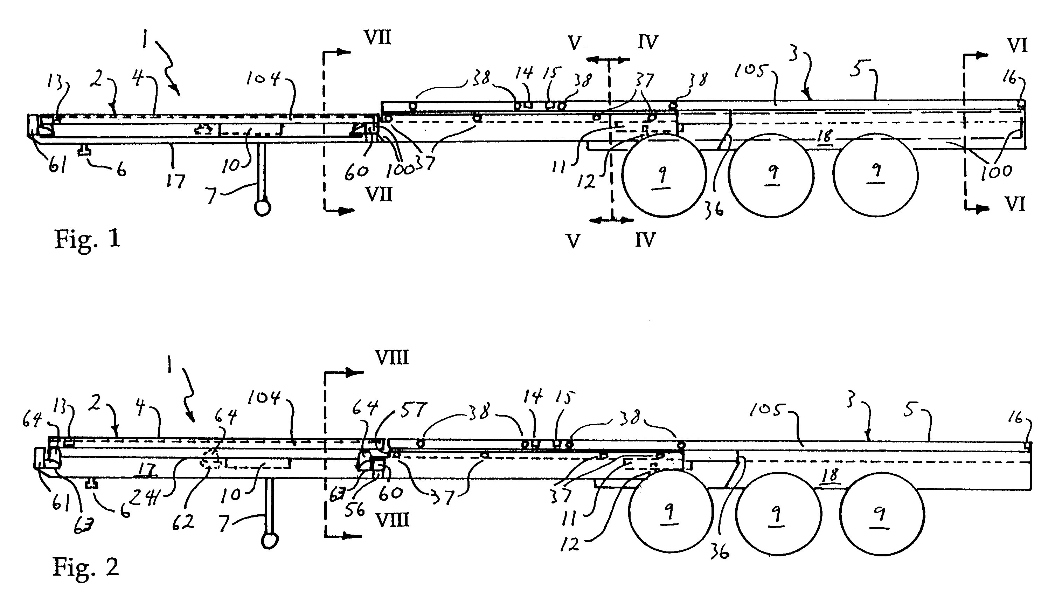

Referring first to Figures 1, 2 and 3, an extendible flatbed trailer 1 has a forwards chassis section 2, and a rearwards bogie section 3, each of which has a platform 104,105 with a load bearing floor surface 4,5. The chassis section 2 has a standard mounting king pin 6 for a fifth-wheel connection to a truck (not shown), and drop-down front support legs 7 shown in the dropped position.

The rear bogie section 3 has three axles 8 with six wheels 9. The trailer could have fewer sets of wheels, but for larger types of trailers it is preferable to have three axles in order to provide a greater potential load bearing capacity. For the sake of clarity in the drawings, the details of the axle suspension and connection to the rear bogie section 3 are not shown.

The front half of the extendible trailer 3 has two fifth-wheel type automatic latching mechanisms 10,11 mounted beneath the level of the forward floor 5 on the longitudinal centre line of the trailer. The rear half of the trailer 2 has a fixed pin 12 which is vertically aligned and which engages with and automatically latches within either of the latching mechanisms 10,11 when the trailer has been extended or retracted into position. Since the trailer is shown fully extended, the pin 12 is shown engaged within the rear latch 11.

The trailer 1 is suitable for carrying palletised loads and other solid or packaged goods which may be strapped down to the floor of the flatbed sections. The trailer also has mounting points 13-16 for 6.1 m or 12.2 m containers. These mounts are standard twist-lock mounts, which rotate to flip up above the level of the floor so that there is some small clearance between the container and the floor.

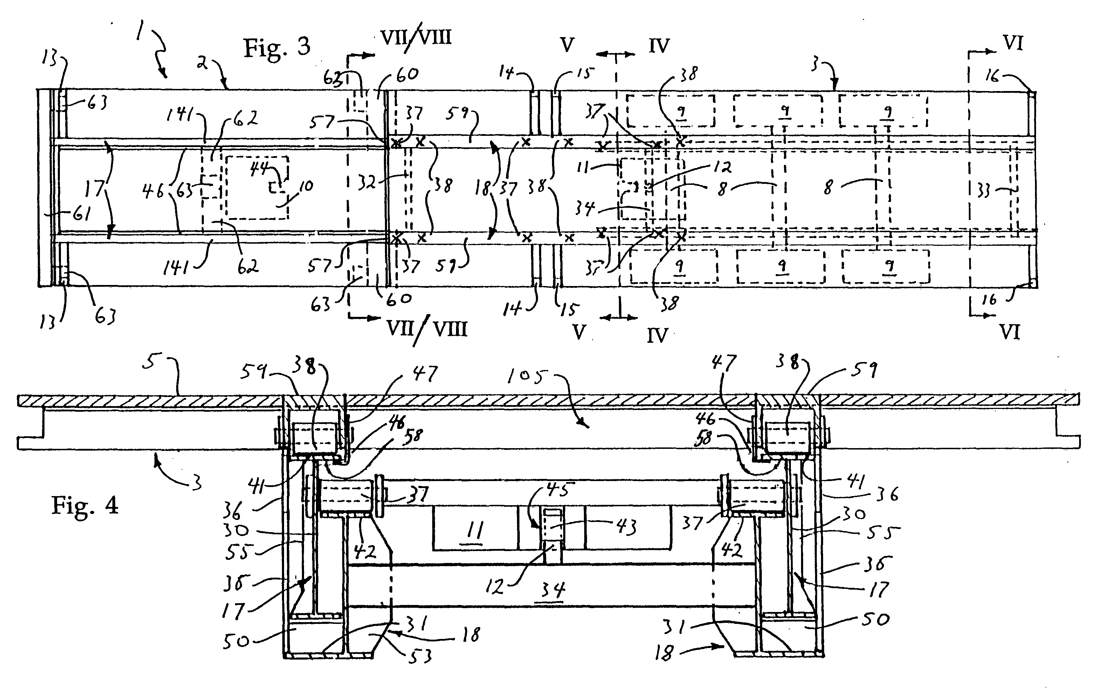

Both the front and rear sections 2,3 have chassis members 17,18 made from steel beams. As can be seen from Figure 3, each chassis member 17,18 is formed from parallel beams spaced equidistantly from a longitudinal centre line of the trailer.

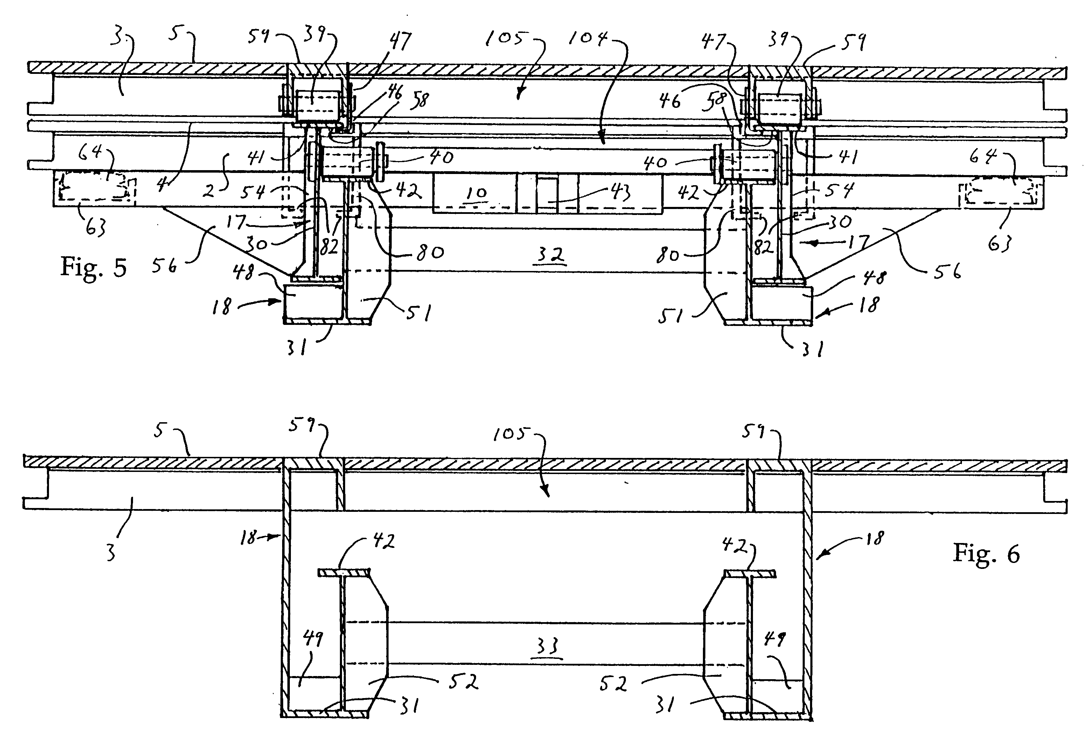

The operation of the chassis members may be understood from the cross-sections seen in Figures 4,5 and 6. The front chassis member 17 is formed from two parallel steel I-beams 30. The rear chassis member 18 is formed from two parallel steel C-beams 31, which are seen most clearly in Figure 6. The C-beams are held together by transverse struts 32,33,34.

Because the front lower section 2 slides nearly fully underneath the rear upper section 3 when the trailer is retracted, as shown in phantom with long dashes 100 in Figure 1, the outer side section of each C-beam 31 is cut away back to an edge 36.

Each beam has a number of steel rollers attached just below the floors 4,5 of the platforms 104,105. The front chassis members 17 have a set of lower steel rollers 37, and the rear chassis members 18 have a set of upper steel rollers 38. The operation of the rollers can be appreciated from Figures 4 and 5. The upper rollers 38 roll on a flat bottom surface 41 of the I-beam 18 and the lower rollers 37 roll on a flat lip 42 of the C-beam 17.

As the sections 2,3 are moved between extended and retracted positions, the rollers 37,38 will roll along the lengths of the beams. The fifth-wheel type automatic latching mechanisms 10,11 stop the sections from moving beyond the extended and retracted positions, when the pin 12 enters the latch and is captured and secured in place by a bolt 43 which is thrust across the pin 12. Each automatic latching mechanism 10,11 may be unlocked by means of an air driven line (not shown) which pulls back the bolt 43 to release the pin 12.

As can be seen from Figure 3, the top 59 of the C-beam 31 forms part of the floor surface 5 of the rear platform 105. Since the floor 5 may be formed from light weight materials such as wood or aluminium alloy sheets, this top surface 59 of the C-beam provides reinforcement to help protect the floor surface 5 from damage during loading and loading of the trailer.

Returning to Figures 1, 2 and 3 the load of each section is borne ultimately by the axles 8 or king pin mount 6. When the extendible flatbed trailer 1 is in the retracted position 100, the load on the top section 3 will be transmitted directly through the C-beams 31 to the suspension system and axles 8. Since in this position the front section 2 is directly beneath the rear section 3, the weight of the front section will be transmitted through the lower set of rollers 37 onto the flat lips 42 of the C-beams, and thence to the axles 8.

When the extendible flatbed trailer is in the extended position, however, the both front and rear sections 2,3 may carry a load, and there will in general be a twisting moment about a horizontal axis perpendicular to the length of the trailer, which would tend to pull the sections apart towards the rear end of the front section 2. In order to prevent this from happening, the rollers 37,38 are more closely spaced towards the rear of the chassis section 2 and front of the bogie section 3. Also, the floor 4 of the front section 2 has a groove 46 which runs parallel to and along the inner edges of the tops 41 of both I-beams 30. Each C-beam 31 then has a retaining clip 47 attached at each upper wheel 38 which passes into the groove 46 and hooks around an underside 58 of the top of the I-beam 41. The underside 58 of the I-beam therefore acts as a retaining surface to hold the two sections 2,3 together. In use, the retaining clip 47, and also the steel rollers 37,38 would be lubricated with oil so that the sections could be retracted and extended smoothly.

In case the retaining clip 47 becomes loose, the C-beam has a series of spaced ribs 48,49,50 which would come into contact with the base of the I-beam to prevent the sections from twisting apart. These ribs 48,49,50 also provide transverse reinforcement to the C-beam.

Other spaced transverse ribs are provided to brace the beams, and are indicated in the drawings by numerals 51 to 55.

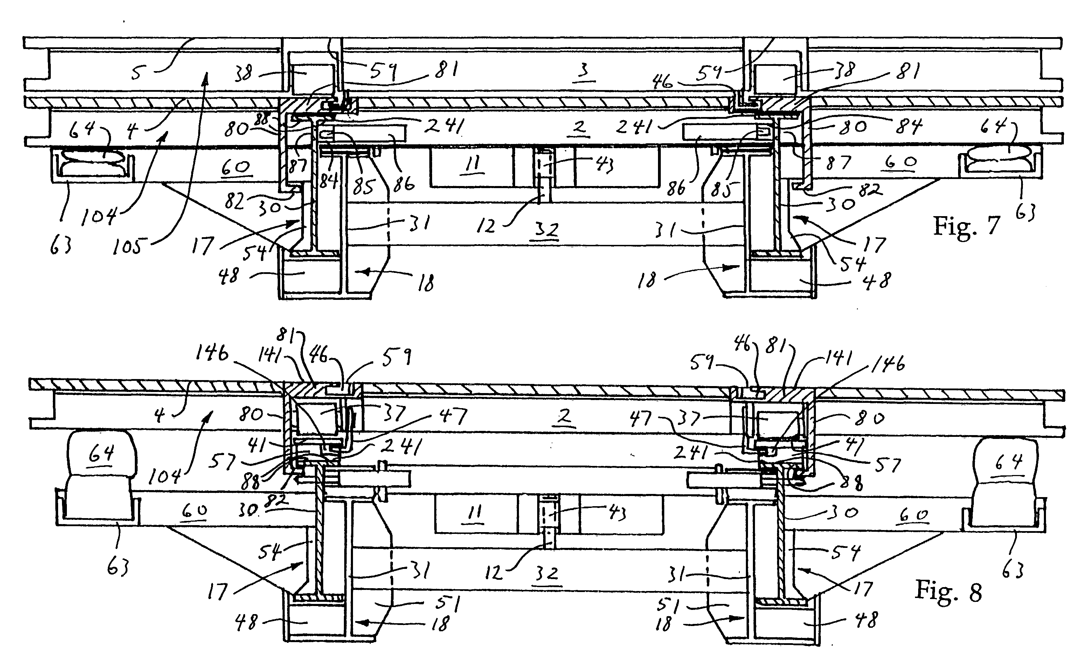

Ribs may also provide reinforcement between the beams and the platforms; one such pair of ribs may be seen in Figures 7 and 8, in which ribs 56 brace a pair of transverse chassis members 60 which project outwards from each of the I-beams 30. Referring now also to Figures 1 to 3, a forward transverse chassis member 61 extends across the front end of the I-beams, and a middle transverse chassis member 62 extends between the I-beams. At the ends of the forward and rearward transverse chassis members 60,61 and at the centre of the middle transverse chassis member 62, brackets 63 support five air bags 64 which may be inflated through air lines (not shown). With the trailer extended, when the five air bags 64 are inflated, they push up the front platform 104, raising the front floor surface 4 to be approximately co-planar with the rear floor surface 5.

The front platform 104 has in its floor a pair of inverted square U-shaped channels 80 (see Figure 5). Each channel has a base 81 with an outer top surface 141 which, when the front platform 104 is lowered, is co-planar with the top of the part of the I-beam 41 beneath the rear platform 105. The upper steel rollers 38 therefore run along the channels' top surfaces 141 as well as the tops of the I-beams 41 when the sections are moved between extended and retracted positions. The channels' top surfaces 141 also provide reinforcement to the front floor surface, in an analogous manner to that described above for the rear floor surface.

When the air bags 64 are deflated and the front platform 104 is lowered, each channel base 81 rests on an I-beam 30, thus supporting the front platform 104. The top surface 241 of the forwardmost part of the I-beam, ie that part in contact with the channel base, is therefore lower than the top of the rearwardmost part of the I-beam 41, ie that which in the extended position remains below the rear platform 105.

Between these two parts of the I-beam 30, there is a step 57 in the I-beam. A slot 146 is cut through this step so that when the sections are moved from extended to retracted positions, the retaining clips 47 may move through the slot in the step, between the rearwardmost part of the I-beam and the groove 46 in the channel base 81.

When the front platform 104 is pushed fully upward by the air bags, the front floor surface 4 is about 5 mm above the level of the rear floor surface 5. The upward displacement of the front platform is limited by contact between the laterally projecting tops or lips 88 of the forward most part of the I-beam with inwardly opposed flanges or ledges 82 at the sides of each channel 80. (To avoid interference with the C-beams 31, the inner ledges of the channels do not extend as far rearward as section lines VII-VII and VIII-VIII and so, while visible in Figure 5, are not visible in Figures 7 and 8.) The lips 88 therefore act as a stop feature whilst the ledges 82 act as a retention feature.

Once the front platform 104 has been fully raised, the platform can be secured in an elevated position by means of pairs of pins 85, which are outwardly driven by spring loaded pistons 86. The pair of pistons illustrated are mounted with brackets 84 to inner sides of the I-beams 30. Although not visible in the drawings, two other pairs of pistons further forward are mounted on the middle 62 and forwardmost 61 transverse chassis members.

The pistons may be driven by air lines (not shown) whereupon the pins 85 become fully retracted as shown in Figure 7. The front platform may then be raised or lowered. Once the air pressure to the pistons is released, a spring (not shown) in each of the six the pistons automatically drives a pin 85 through an aperture 87 in the I-beam to seat the pin under the channel ledge 82, as shown in Figure 8. The air pressure to the air bags 64 may then be released so that the platform drops down about 5 mm to sit securely on the pins, the weight of the platform and its load being taken via the pins to the I-beams.

The front platform 104 may be lowered and retracted in the reverse manner, by first activating the air bags 64 to raise the platform slightly off the pins 85. The pistons 86 are then driven by air to withdraw the pins, whereupon the air bags may be deflated to drop the platform. The air to the pistons may then be released so that the pins again seat in the apertures 87.

Once the front platform is in the lower position, the flatbed trailer may be moved from an extended to a retracted position by locking the wheels, activating the air line to the rear latch 11 in order to release the vertical pin 12 whereupon the truck may back down on the trailer until the front latch 10 becomes engaged at the retracted position.

For convenience and safety, the trailer is fitted with sensors and interlocks (not shown) so that each stage of the above process (eg retraction of pins, elevation of platform, etc) is sensed before the next stage may be activated by the air lines.

The channels in the front platform, apart from supporting the front platform in both the raised and lowered positions, also provide a guard along the outer facing sides of the I-beams so helping to prevent anything becoming trapped between the platform and I-beam as the platform is raised and lowered. This arrangement also permits a lower profile trailer by lowering the floor surface of the deck with respect to the chassis members. This lowers the centre of gravity of the trailer while at the same time allowing taller loads to be carried within any height restriction.

The front and rear platforms described in detail above may readily be made with floor levels that are level along the join between the front and rear sections to within 3 mm when the trailer is in the extended position and the front platform secured in an elevation position. In practical terms, this is "no step".

The floor surfaces 4,5 described above in the floor platforms 104,105 may be formed from light-weight materials such as wood or from aluminium alloy sheets

The extendible flatbed trailer 1 described above is 12.2 m (40 feet) long when in the extended position, and 8.23 m (27 feet) long when retracted. Another version of this trailer, which is 13.72 m (45 feet) long when extended, is 9.14 m (30 feet) long when retracted. The width of the trailer may be up to 2.55 m.

The extendible flatbed trailer may also be provided with additional structural elements above the floor of the sections. For example, the rear half of the trailer may have drop-down sides, which would allow the trailer to haul a load which could not be fully secured by means of straps alone. The front half of the trailer could then be used for more securely packaged goods, for example pallets.

The extendible flatbed trailer could be fitted with curtain sides or top, or even with solid sides with a foldable top. In the latter example, the rear half of the sides could slot into a cavity in hollow-walled front sides when the trailer was retracted.

A particular advantage of the present invention is that it allows full use the flatbed floor area when extended, since loads can span the substantially co-planar floor surfaces. Fork lift trucks and workers may traverse the extended floor without the risk that a foot or tine may catch with a step, thus avoiding a potential safety hazard.

The ability to alter the length of the trailer could also provide other economies. For example, when travelling by ferry, the trailer could be retracted when not fully loaded and so reduce the length-related charges for the ferry crossing.

## Claims

1. An extendible flatbed trailer (1) comprising: a chassis section (2), the chassis section supporting a first platform (104), the first platform having a load bearing first floor surface (4); and a wheeled bogie section (3), the bogie section supporting a second platform (105), the second platform having a load bearing second floor surface (5), wherein the bogie section (3) is slidably connected to the chassis section (2) and relatively movable between extended and retracted positions, one of the floor surfaces (4,5) relatively extending from underneath the other floor surface (4,5) as the sections (2,3) are moved from a retracted to an extended position, **characterised in that** the trailer (1) comprises elevation means (64) for altering the relative levels of the floor surfaces (4,5) with respect to each other so that when the sections (2,3) are extended the relative levels of the floor surfaces (4,5) may be altered by the elevation means (64) so that the platforms (104,105) present substantially co-planar floor surfaces.

2. An extendible flatbed trailer as claimed in Claim 1, in which the first floor surface (4) extends from underneath the second floor surface (5).

3. An extendible flatbed trailer as claimed in Claim 1 or Claim 2, in which the elevation means (64) acts on only one of the platforms (104,105).

4. An extendible flatbed trailer as claimed in Claim 3, in which the elevation means (64) acts on the first platform (104).

5. An extendible flatbed trailer as claimed in any preceding claim, in which at least one section (2,3) has a longitudinal chassis member (17,18).

6. An extendible flatbed trailer as claimed in any preceding claim, in which at least one section (2,3) has transverse chassis members (60,61,62) supporting a platform (104,105).

7. An extendible flatbed trailer as claimed in Claim 5 or Claim 6, in which the elevation means (64) are positioned between a chassis member (17) and a platform (104).

8. An extendible flatbed trailer as claimed in Claim 5, in which the elevation means (64) moves a platform (104) up and down with respect to the longitudinal chassis member (17) when the elevation means (64) alters the relative levels of the floor surfaces (4,5).

9. An extendible flatbed trailer as claimed in Claim 8, in which a platform (104) has a channel (80), the longitudinal chassis member (17) extending along the channel (80) and being retained at least partly within the channel when the elevation means (64) alters the relative levels of the floor surfaces (4,5).

10. An extendible flatbed trailer as claimed in Claim 9, in which the channel (80) has walls which conceal any gap between the longitudinal chassis member (17) and the platform (104) when the elevation means (64) alters the relative levels of the floor surfaces (4,5).

11. An extendible flatbed trailer as claimed in Claim 9 or Claim 10, in which the channel (80) has a retention feature (82) and the longitudinal chassis member has a stop feature (88), the stop and retention features being adapted to limit how far the platform (104) may move away from the longitudinal chassis member (17).

12. An extendible flatbed trailer as claimed in Claim 11, in which the longitudinal chassis member (17) is an I-beam (30) having a laterally extending lip (88) which acts as the stop feature.

13. An extendible flatbed trailer as claimed in Claim 11 or Claim 12, in which the channel (80) has a ledge (82) extending laterally across a mouth of the channel, the ledge acting as the retention feature.

14. An extendible flatbed trailer as claimed in any one of Claims 9 to 13, in which the channel (80) has a base (81) which serves as a load bearing member for the uppermost platform (105) when the platforms (104,105) are moved between extended and retracted positions.

15. An extendible flatbed trailer as claimed in any preceding claim, in which the elevation means comprise one or more air bags (64) which when inflated push up a platform (104).

16. An extendible flatbed trailer as claimed in Claim 15, in which the elevation means has means to secure the platform in position (85,86) after the air bags (64) have pushed up the platform (104).

17. An extendible flatbed trailer as claimed in Claim 16, in which the means to secure the platform (85,86) in position after the air bags (64) have pushed up the platform (104) comprise a pin (86) which inserts in a seat (87) between a chassis member (17) and the platform (104).

18. An extendible flatbed trailer as claimed in any preceding claim, in which the trailer (1) has means to secure the sections (2,3) in an extended position (11,12) prior to alteration of the relative floor levels by the elevation means (64).

19. An extendible flatbed trailer as claimed in any preceding claim, in which the trailer (1) has additional structural elements above a floor surface for containing a load.

20. An extendible flatbed trailer as claimed in any preceding claim, in which the trailer has mounts (13,14, 15,16) in a floor surface of a platform (104,105) for containerised transport.

21. A method of extending an extendible flatbed trailer, the trailer comprising: a chassis section (2), the chassis section supporting a first platform (104), the first platform having a load bearing first floor surface (4); and a wheeled bogie section (3), the bogie section supporting a second platform (105), the second platform having a load bearing second floor surface (5), wherein the bogie section (3) is slidably connected to the chassis section (2) and relatively movable between extended and retracted positions, one of the platforms (2,3) nesting underneath the other platform (2,3) when the trailer is retracted, **characterised in that** the trailer (1) comprises elevation means (64) for altering the relative levels of the floor surfaces (4,5) with respect to each other, and **in that** the method comprises the steps of:
a) extending the sections (2,3) to pull one of the platforms (104) out from underneath the other platform (105); and
b) then altering the relative levels of the floor surfaces (4,5) with respect to each other so that the platforms (104,105) present substantially co-planar floor surfaces (4,5).

22. A method as claimed in Claim 21, in which the trailer has means to secure the sections in an extended position (11,12), the method comprising the step between step a) and b) of:
c) securing the sections (2,3) in an extended position.

23. A method as claimed in Claim 21 or Claim 22, in which the elevation means (64) has means to secure the platform in position (85,86) after the elevation means has altered the relative levels of the floor surfaces (4,5), the method comprising the step after step b) of:
d) securing the platform (104) in position.

## Patentansprüche

1. Ausziehbarer Flachbettanhänger (1), umfassend: einen Chassisbereich (2), welcher Chassisbereich eine erste Plattform (104) trägt, wobei die erste Plattform eine erste, eine Ladung tragende Bodenfläche (4) hat; und einen Fahrwerksbereichs mit Rädern (3), welcher Fahrwerksbereich eine zweite Plattform (105) trägt, wobei die zweite Plattform eine zweite, eine Ladung tragende Bodenfläche (5) hat, wobei der Fahrwerksbereich (3) verschiebbar mit dem Chassisbereich (2) verbunden und relativ beweglich zwischen einer ausgezogenen und einer zurückgezogenen Position ist, wobei eine der Bodenflächen (4, 5) relativ von unterhalb der anderen Bodenfläche (4, 5) ausfährt, wenn die Bereiche (2, 3) von einer eingefahrenen in eine ausgezogene Position bewegt werden,
**dadurch gekennzeichnet,**
**daß** der Anhänger (1) ein Hubmittel (64) zum Ändern der relativen Höhenlage der Bodenflächen (4, 5) gegenüber einander umfaßt, derart, daß in ausgezogener Lage der Bereiche (2, 3) die relativen Höhenlagen der Bodenflächen (4, 5) durch das Hubmittel (64) so verändert werden können, daß die Plattformen (104, 105) im wesentlichen co-planare Bodenflächen darstellen.

2. Ausziehbarer Flachbettanhänger nach Anspruch 1,
bei dem die erste Bodenfläche (4) von unterhalb der zweiten Bodenfläche (5) ausfährt.

3. Ausziehbarer Flachbettanhänger nach Anspruch 1 oder 2, bei dem das Hubmittel (64) auf lediglich eine der Plattformen (104, 105) einwirkt.

4. Ausziehbarer Flachbettanhänger nach Anspruch 3,
bei dem das Hubmittel (64) auf die erste Plattform (104) einwirkt.

5. Ausziehbarer Flachbettanhänger nach einem der vorangehenden Ansprüche,
bei dem mindestens ein Bereich (2, 3) ein in Längsrichtung sich erstreckendes Chassisteil (17, 18) aufweist.

6. Ausziehbarer Flachbettanhänger nach einem der vorangehenden Ansprüche,
bei dem mindestens ein Bereich (2, 3) quer verlaufende Chassisteile (60, 61, 62) aufweist, welche eine Plattform (104, 105) tragen.

7. Ausziehbarer Flachbettanhänger nach Anspruch 5 oder 6, bei dem das Hubmittel (64) zwischen einem Chassisteil (17) und einer Plattform (104) angeordnet ist.

8. Ausziehbarer Flachbettanhänger nach Anspruch 5,
bei dem das Hubmittel (64) eine Plattform (104) aufwärts und abwärts gegenüber dem in Längsrichtung verlaufenden Chassisteil (17) bewegt, wenn das Hubmittel (64) die relative Höhenlage der Bodenflächen (4, 5) verändert.

9. Ausziehbarer Flachbettanhänger nach Anspruch 8,
bei dem eine Plattform (104) einen Kanal (80) hat, das in Längsrichtung sich erstreckende Chassisteil (17) entlang des Kanals (80) ausfährt und mindestens teilweise innerhalb des Kanals zurückgehalten wird, wenn das Hubmittel (64) die relative Höhenlage der Bodenflächen (4, 5) ändert.

10. Ausziehbarer Flachbettanhänger nach Anspruch 9,
bei dem der Kanal (80) Wände hat, welche jeden Spalt zwischen dem in Längsrichtung sich erstreckenden Chassisteil (17) und der Plattform (104) abdecken, wenn das Hubmittel (64) die relative Höhenlage der Bodenflächen (4, 5) verändert.

11. Ausziehbarer Flachbettanhänger nach Anspruch 9 oder 10, bei dem der Kanal (80) ein Halteelement (82) und das in Längsrichtung sich erstreckende Chassisteil ein Anschlagelement (88) hat, wobei Anschlag- und Halteelement so ausgebildete sind, daß sie begrenzen, wie weit die Plattform (104) sich vom in Längsrichtung erstrekkenden Chassisteil (17) weg bewegen kann.

12. Ausziehbarer Flachbettanhänger nach Anspruch 11,
bei dem das in Längsrichtung sich erstreckende Chassisteil (17) ein I-Träger (30) ist, der einen seitlich sich erstreckenden Flansch (88) hat, welcher als Anschlagelement wirkt.

13. Ausziehbarer Flachbettanhänger nach Ansprüchen 10 oder 11,
bei dem der Kanal (80) einen vorspringenden Rand (82) hat, der sich seitlich über die Öffnung des Kanals erstreckt, wobei der Rand als Halteelement wirkt.

14. Ausziehbarer Flachbettanhänger nach einem der Ansprüche 9 bis 13,
bei dem der Kanal (80) eine Basis (81) hat, welche als ladungstragendes Teil für die oberste Plattform (105) dient, wenn die Plattformen (104, 105) zwischen ausgezogener und zurückgezogener Position bewegt werden.

15. Ausziehbarer Flachbettanhänger nach einem der vorangehenden Ansprüche,
bei dem das Hubmittel einen oder mehrere Luftkissen (64) umfaßt, die beim Aufblasen eine Plattform (104) nach oben drücken.

16. Ausziehbarer Flachbettanhänger nach Anspruch 15,
bei dem das Hubmittel Mittel zum Sichern der Plattform in ihrer Stellung (85, 86) hat, nachdem die Luftkissen (64) die Plattform (104) nach oben gedrückt haben.

17. Ausziehbarer Flachbettanhänger nach Anspruch 16,
bei dem die Mittel zum Sichern der Plattform in ihrer Stellung (85, 86), nachdem die Luftkissen (64) die Plattform (104) aufwärts gedrückt haben, einen Zapfen (86) umfassen, welcher in ein Auflager (87) zwischen einem Chassisteil (17) und der Plattform (104) eingreift.

18. Ausziehbarer Flachbettanhänger nach einem der vorangehenden Ansprüche,
wobei der Anhänger (1) Mittel zum Sichern der Bereiche (2, 3) in einer ausgefahrenen Position (11, 12) vor der Änderung der relativen Höhenlagen durch das Hubmittel (64) aufweist.

19. Ausziehbarer Flachbettanhänger nach einem der vorangehenden Ansprüche,
bei dem der Anhänger (1) zusätzliche Aufbauelemente oberhalb einer Bodenfläche zur Aufnahme einer Last aufweist.

20. Ausziehbarer Flachbettanhänger nach einem der vorangehenden Ansprüche,
bei dem der Anhänger Aufsatzvorrichtungen (13, 14, 15, 16) auf einer Bodenfläche einer Plattform (104, 105) für den Containertransport aufweist.

21. Verfahren zum Ausziehen eines ausziehbaren Flachbettanhängers, wobei der Anhänger umfaßt: einen Chassisbereich (2), welcher Chassisbereich eine erste Plattform (104) trägt, wobei die erste Plattform eine erste, eine Ladung tragende Bodenfläche (4) hat; und einen Fahrwerksbereich (3) mit Rädern, welcher Fahrwerksbereich eine zweite Plattform (105) trägt, wobei die zweite Plattform eine zweite, eine Ladung tragende Bodenfläche (5) hat, wobei der Fahrwerksbereich (3) verschiebbar mit dem Chassisbereich (2) verbunden und relativ beweglich zwischen einer ausgezogenen und einer zurückgezogenen Position ist, wobei eine der Plattformen (2, 3) unterhalb der anderen Plattform (2, 3) verstaut ist, wenn sich der Anhänger im eingeschobenen Zustand befindet,
**dadurch gekennzeichnet,**
**daß** der Anhänger (1) ein Hubmittel (64) zum Ändern der relativen Höhenlagen der Bodenflächen (4, 5) einander gegenüber umfaßt, und daß das Verfahren die folgenden Schritte umfaßt:
a) Ausfahren der Bereiche (2, 3) zum Vorziehen der Plattformen (104) von unterhalb der anderen Plattform (105); und
b) dann Ändern der relativen Höhenlagen der Bodenflächen (4, 5) einander gegenüber derart, daß die Plattformen (104, 105) im wesentlichen co-planare Bodenflächen (4, 5) darstellen.

22. Verfahren nach Anspruch 21,
bei dem der Anhänger Mittel zum Sichern der Bereiche in einer ausgezogenen Stellung (11, 12) hat, wobei das Verfahren zwischen Schritt a) und Schritt b) den Schritt umfaßt:
c) Sichern der Bereiche (2, 3) in einer ausgezogenen Stellung.

23. Verfahren nach Anspruch 21 oder 22,
bei dem das Hubmittel (64) Mittel aufweist zum Sichern der Plattform in ihrer Stellung (85, 86), nachdem das Hubmittel die relative Höhenlage der Bodenflächen (4, 5) geändert hat, wobei das Verfahren nach Schritt b) den Schritt umfaßt:
d) Sichern der Plattform (104) in ihrer Stellung.

## Revendications

1. Remorque (1) à plateau extensible, comprenant : un châssis (2), le châssis supportant une première plate-forme (104), la première plate-forme comportant une première surface formant plancher (4) pour porter une charge, et un train (3) de roues, le train supportant une seconde plate-forme (105), la seconde plate-forme ayant une seconde surface formant plancher (5) pour supporter une charge, le train de roues (3) étant relié de manière coulissante au châssis (2) et pouvant se déplacer entre des positions sortie et rentrée, l'une des surfaces formant planchers (4, 5) sortant de dessous l'autre surface formant plancher (4, 5) lorsque le châssis et le train de roues (2, 3) passent d'une position rentrée à une position sortie, la remorque (1) étant **caractérisée en ce qu'**elle comporte un moyen élévateur (64) pour modifier les niveaux relatifs des surfaces formant planchers (4, 5) l'une par rapport à l'autre de façon que, lorsque le châssis (2) et le train (3) sont déployés, les niveaux relatifs des surfaces formant planchers (4, 5) puissent être modifiés par le moyen élévateur (64) afin que les plates-formes (104, 105) présentent des surfaces formant planchers sensiblement dans le même plan.

2. Remorque à plateau extensible selon la revendication 1, dans lequel la première surface formant plancher (4) s'étend depuis le dessous de la seconde surface formant plancher (5).

3. Remorque à plateau extensible selon la revendication 1 ou la revendication 2, dans laquelle le moyen élévateur (64) agit sur une seule des plates-formes (104, 105).

4. Remorque à plateau extensible selon la revendication 3, dans laquelle le moyen élévateur (64) agit sur la première plate-forme (104).

5. Remorque à plateau extensible selon l'une quelconque des revendications précédentes, dans laquelle le châssis (2) et/ou le train (3) comporte(nt) un châssis longitudinal (17, 18).

6. Remorque à plateau extensible selon l'une quelconque des revendications précédentes, dans laquelle le châssis (2) et/ou le train (3) comporte(nt) des châssis transversaux (60, 61, 62) supportant une plate-forme (104, 105).

7. Remorque à plateau extensible selon la revendication 5 ou la revendication 6, dans lequel le moyen élévateur (64) est placé entre un châssis (17) et une plate-forme (104).

8. Remorque à plateau extensible selon la revendication 5, dans laquelle le moyen élévateur (64) élève et abaisse une plate-forme (104) par rapport au châssis longitudinal (17) lorsque le moyen élévateur (64) modifie les niveaux relatifs des surfaces formant planchers (4, 5).

9. Remorque à plateau extensible selon la revendication 8, dans laquelle une plate-forme (104) comporte un canal (80), le châssis longitudinal (17) s'étendant le long du canal (80) et étant retenu au moins en partie à l'intérieur du canal lorsque le moyen élévateur (64) modifie les niveaux relatifs des surfaces formant planchers (4, 5).

10. Remorque à plateau extensible selon la revendication 9, dans laquelle le canal (80) comporte des parois qui masquent tout intervalle éventuel entre le châssis longitudinal (17) et la plate-forme (104) lorsque le moyen élévateur (64) modifie les niveaux relatifs des surfaces formant planchers (4, 5).

11. Remorque à plateau extensible selon la revendication 9 ou la revendication 10, dans laquelle le canal (80) comporte un système de retenue (82) et le châssis longitudinal comporte un système d'arrêt (88), les systèmes d'arrêt et de retenue étant conçus pour limiter la distance d'éloignement de la plate-forme (104) par rapport au châssis longitudinal (17).

12. Remorque à plateau extensible selon la revendication 11, dans laquelle le châssis longitudinal (17) est un profilé en I (30) ayant une lèvre latérale (18) qui constitue le système d'arrêt.

13. Remorque à plateau extensible selon la revendication 11 ou la revendication 12, dans laquelle le canal (80) comporte un rebord (82) s'étendant latéralement de part et d'autre d'une embouchure du profilé, le rebord constituant le système de retenue.

14. Remorque à plateau extensible selon l'une quelconque des revendications 9 à 13, dans laquelle le canal (80) comporte une base (81) qui sert d'élément de support de charge pour la plate-forme supérieure (105) lorsque les plates-formes (104, 105) sont actionnées entre les positions sortie et rentrée.

15. Remorque à plateau extensible selon l'une quelconque des revendications précédentes, dans laquelle le moyen élévateur comporte un ou plusieurs coussins pneumatiques (64) qui, lorsqu'ils se gonflent, poussent une plate-forme (104) vers le haut.

16. Remorque à plateau extensible selon la revendication 15, dans laquelle le moyen élévateur comporte un moyen (85, 86) pour retenir la plate-forme en place après que les coussins pneumatiques (64) ont poussé la plate-forme (104) vers le haut.

17. Remorque à plateau extensible selon la revendication 16, dans laquelle le moyen (85, 86) servant à retenir la plate-forme en place après que les coussins pneumatiques (64) ont poussé la plate-forme (104) vers le haut comporte une broche (86) qui s'insère dans un siège (87) entre un châssis (17) et la plate-forme (104).

18. Remorque à plateau extensible selon l'une quelconque des revendications précédentes, la remorque (1) comportant un moyen pour retenir le châssis (2) et le train (3) dans une position sortie (11, 12) avant la modification des niveaux relatifs de planchers par le moyen élévateur (64).

19. Remorque à plateau extensible selon l'une quelconque des revendications précédentes, la remorque (1) comportant des éléments de structure supplémentaires au-dessus de la surface d'un plancher afin de contenir une charge.

20. Remorque à plateau extensible selon l'une quelconque des revendications précédentes, la remorque ayant des supports (13, 14, 15, 16) dans une surface formant plancher d'une plate-forme (104, 105) pour le transport en conteneur.

21. Procédé pour déployer une remorque à plateau extensible, la remorque comprenant : un châssis (2), le châssis supportant une première plate-forme (104), la première plate-forme ayant une première surface formant plancher (4) servant à porter une charge, et un train (3) de roues, le train de roues supportant une seconde plate-forme (105), la seconde plate-forme ayant une seconde surface formant plancher (5) servant à porter une charge, dans lequel le train (3) de roues est assemblé de manière coulissante avec le châssis (2) et est mobile entre des positions sortie et rentrée, l'une des plates-formes (2, 3) s'emboîtant sous l'autre plate-forme (2, 3) lorsque la remorque est escamotée, **caractérisé en ce que** la remorque (1) comprend un moyen élévateur (64) servant à modifier les niveaux relatifs des surfaces formant planchers (4, 5) l'un par rapport à l'autre, et **en ce que** le procédé comprend les étapes consistant à :
a) déployer le châssis (2) et le train (3) pour faire sortir l'une des plates-formes (104) de dessous l'autre plate-forme (105) ; et
b) modifier ensuite les niveaux relatifs des surfaces formant planchers (4, 5) l'un par rapport à l'autre de façon que les plates-formes (104, 105) présentent des surfaces formant planchers (4, 5) sensiblement dans le même plan.

22. Procédé selon la revendication 21, dans lequel la remorque comporte des moyens (11, 12) pour retenir le châssis et le train en position déployée, le procédé comprenant, entre les étapes a) et b), l'étape consistant à :
c) retenir le châssis (2) et le train (3) en position déployée.

23. Procédé selon la revendication 21 ou la revendication (22), dans lequel le moyen élévateur (64) comporte des moyens (85, 86) pour retenir la plate-forme en place après que le moyen formant élévateur a modifié les niveaux relatifs des surfaces formant planchers (4, 5), le procédé comprenant, après l'étape b), l'étape consistant à :
d) retenir la plate-forme (104) en place.
